# EUROPEAN PATENT SPECIFICATION

(11) **EP 4 010 593 B1**
(45) Date of publication and mention of the grant of the patent: **17.07.2024**
(21) Application number: 20747436.2
(22) Date of filing: 05.08.2020
(51) Int. Cl.: F03G 7/06, F16K 7/16, F16K 31/02

(54) **VALVE WITH A SHAPE-MEMORY-ACTUATOR**
VENTIL MIT EINEM FORMGEDÄCHTNISAKTUATOR
SOUPAPE DOTÉE D'UN ACTIONNEUR À MÉMOIRE DE FORME

(30) Priority: 06.08.2019 EP 19190378
(43) Date of publication of application: 15.06.2022
(73) Proprietor: Fraunhofer-Gesellschaft zur Förderung der angewandten Forschung e.V., 80686 München (DE); Rivulis Plastro Ltd., Kibbutz Gvat 3657900 (IL)
(72) Inventor: JUNKER, Tom, 01187 Dresden (DE); EPPLER, Christoph, 01187 Dresden (DE); PAGEL, Kenny, 01187 Dresden (DE); KEIL-KOPP, Stefan, 01187 Dresden (DE); SHMUELI, Dotan, 3657900 Kibbutz Gvat (IL); WAISSGURT, Vatslav, 3657900 Kibbutz Gvat (IL)
(74) Representative: Pfenning, Meinig & Partner mbB
(86) International application number: PCT/EP2020/071966
(87) International publication number: WO 2021/023758

(56) References cited:
- US-A- 3 974 844
- US-A- 4 848 388
- US-A- 4 973 024
- US-A1- 2012 025 113
- US-A1- 2013 199 646

## Description

The present invention relates to a valve comprising a shape-memory-actuator and a method for operating said actuator.

There is an increasing demand for fluid handling remotely controlled valve devices which are light-weight, small in size, show minimum power consumption, operate with low noise, are cost-effective, and easy to use. Such valves can be used in numerous applications in medical engineering, automotive engineering, white goods, or irrigation systems. In most applications, it is important that the fluid handling valve has two operational states, i.e. open and closed, while energy is preferably only applied when such a valve switches between the states. Valve systems known from prior art usually do not meet all of these criteria.

One conventional solution of such valves are miniature solenoid valves. However, these valves are limited in size, cross section, complexity, and consequently costs. In order to achieve the desired performance, a solenoid valve typically consumes a substantial amount of power. Shape memory alloys (SMA) are able to overcome some of the problems associated with conventional valves. Document US 6843465 B1, for example, discloses a SMA wire actuated control valve. Disadvantageously, the SMA element has to be kept activated and, in consequence, heated when the valve is open. Documents US 902903 B2 and US 9206789 B2 provide similar solutions. Document US 9057451 B2 shows another approach of an SMA element, which also suffers the drawback that the SMA element has to be kept in its activated state to keep the valve open.

EP 3153750 A1 refers to an antagonistic arrangement, in which the valve can keep the open and closed position without consuming energy. In this case, two actuators work against each other. This setup shows the disadvantage that locking mechanisms are required resulting in a restricted force performance and an increased complexity.

US 2012/025113 A1 discloses a drive unit for a micro valve which comprises a housing, a spring and at least one shape memory alloy element which is attached to the housing in a deflectable manner. The shape memory alloy element is loaded by the spring towards a deflected position and is movable in response to a temperature increase and the shape memory effect activated thereby, into a position which is at least less deflected against an increasing load by the spring. A normally closed micro valve includes a fluid housing, at least one valve seat, a sealing element opposite the valve seat, and a drive unit of the type mentioned above. The shape memory alloy element cooperates with the sealing element and exerts an operating force on the sealing element for closing and opening the valve seat with or against a compression spring force.

The present invention is therefore based on the object of providing a valve overcoming the outlined problems, i.e., which can be operated with minimum power consumption in a reliable manner and shows a setup of reduced complexity in order to reduce the risk of malfunctions.

This object is achieved according to the invention by a valve as claimed in claim 1 and a method for operating the valve as claimed in claim 15. Advantageous developments and embodiments are described in the dependent claims.

A valve comprises a housing with a fluid inlet, a fluid outlet, and a cavity positioned between the fluid inlet and the fluid outlet in the housing. A membrane is arranged at an end of the fluid inlet facing the cavity or at an end of the fluid outlet facing the cavity and a movable solid element is in touching contact with the membrane arranged on a side of the membrane facing the cavity, so that the membrane can be deformed by the solid element upon exertion of pressure on the solid element for closing and opening the fluid inlet or the fluid outlet. A movable element is arranged in the cavity and in touching contact with the solid element. The movable element is held in a first position by a biased spring and a shape-memory-actuator, which are arranged on opposite sides of the movable element. The shape-memory-actuator comprises a shape-memory-alloy which is activatable by applying an electric voltage (which causes an electrical current which results in thermal energy) resulting in deformation of the shape-memory-actuator and in a movement of the movable element, thereby exerting pressure on the solid element so that the solid element moves and deformation of the membrane takes place and a fluid passage between the fluid inlet and the fluid outlet can be opened and closed.

The biased spring and the shape-memory-actuator can move the movable element in a reliable manner, wherein this movable element is kept in position as long as the shape-memory-actuator is not activated. As soon as the activation is performed, the movement of the shape-memory-actuator takes place, thereby moving the solid element and deforming the membrane or any other sealing so that the fluid passage in the housing can be closed or opened reliably as well. Using a shape-memory-alloy allows to perform these operations with minimum power consumption while due to usage of the biased spring with preferably a push-push mechanism or a project-retract mechanism no further locking mechanisms are necessary and a simplified setup is provided. The membrane is flexible, i.e., typically shows a Young's modulus smaller than 10 GPa. Using a shape-memory-alloy in the shape-memory-actuator reduces cross section, mass and complexity of the valve. Since only one actuator in the form of the shape-memory-actuator is needed for operating the valve and for switching between two states, the valve is kept simple in configuration and can be manufactured at low costs.

Typically, the shape-memory-actuator is an activatable spring, in order to allow for a reliable activation and stroke. Alternatively, the actuator can also be a voice-coil actuator.

In order to activate the shape-memory-actuator more easily, this shape-memory-actuator can be in electric contact with an electric wire, through which electric energy is supplied. In particular, the shape-memory-actuator can be connected to an electric control unit through the electric wire, so that the electric control unit controls the operation of the valve.

Preferably, the shape-memory-actuator is configured to expand upon applying an electric current to it. This ensures that the force or pressure, respectively, applied by the biased spring can be overcompensated in a defined manner by the shape-memory-actuator. The biased spring and the shape-memory-actuator can apply oppositely directed pressures or forces on the movable element.

The biased spring is preferably a pressure spring in order to apply the necessary force or pressure, respectively.

The movable element can be realised by a cam roller. Typically, the movable element is linearly movable. However, the movable element can also be provided as an element being linearly and rotatably movable.

Preferably, the shape-memory-actuator is located inside a piston and the piston is in mechanical contact with the movable element. Such a configuration allows for applying a linear movement as well as a rotational movement in a simplified manner.

The movable element can be provided with a tapering top and/or an angled edge at the top. The top of the movable element is in touching contact with the solid element so that due to the tapering shape or the angle, respectively, the solid element can be moved, preferably in a direction orthogonal to an axis of the linear movement of the movable element, i.e., typically in a vertical direction.

Preferably, the fluid inlet and the fluid outlet are arranged on opposite sides of the housing in order to achieve a defined fluid passage through the cavity of the housing. More preferably, the fluid inlet is arranged on a top side of the housing and the fluid outlet is arranged on a bottom side of the housing.

Typically, the housing is a fluid-tight housing and the only openings are the fluid inlet, the fluid outlet and an opening for an electric connection of the shape-memory-actuator. This enhances the mechanical and electrical stability of the housing and supports a valve operation because fluid leakage is avoided. The fluid itself is typically water.

In a preferred embodiment, at least the biased spring, the movable element, and the shape-memory-actuator are arranged inside a first casing. This first casing is placed or positioned inside the cavity of the housing. The casing provides a compact mount for these parts.

At least the solid element and the membrane can be positioned in a second casing. The membrane can be attached in this case to this second casing, preferably the membrane is clamped into the second casing, and the solid element is positioned in an opening of this second casing, wherein the second casing comprises a further opening into which the movable element can be inserted.

The solid element is preferably a solid, non-deformable ball, i.e., a Young's modulus of this ball is typically greater than 30 GPa.

The fluid passage can be configured as a channel in such a way that a touching contact between the fluid guided in the fluid passage and the movable solid element, the biased spring, the movable element and the shape-memory-actuator is avoided. This supports the operations of the listed units which are not influenced by the fluid to be transported.

An irrigation valve, i.e., a valve being configured to be used for irrigating or supplying water or another fluid in any manner, respectively, typically comprises the valve with the above described features.

Preferably, the irrigation valve comprises in addition a drip irrigation emitter mounted to the fluid outlet of the previously described valve or mounted to the fluid inlet of said valve for providing the water flowout of said valve to be in a drip by drip manner.

An irrigation system can comprise at least one irrigation water supplied pipe and at least one irrigation valve as described previously mounted to said pipe for controllably conveying irrigation water either to said pipe or from said pipe.

In a method for operating the described valve, in which an electric current is applied to the shape-memory-actuator, so that the shape-memory-actuator is deformed, and the pressure of the biased spring exerted on the movable element is overcompensated resulting in a movement of the movable element in the direction of the biased spring, or the pressure of the shape-memory-actuator exerted on the movable element is overcompensated by the pressure of the biased spring resulting in a movement of the movable element in the direction of the shape-memory-actuator, a pressure is applied on the solid element and the membrane, so that the fluid inlet or the fluid outlet is closed, or the pressure on the solid element and the membrane is released, and the membrane's inherent elasticity pushes back the solid element so that the fluid inlet or the fluid outlet is opened.

Typically, the disclosed method is carried out with the disclosed valve, or, vice versa, the disclosed valve is configured to carry out the disclosed method.

Exemplary embodiments of the invention are illustrated in the drawings and will be explained below with reference to figures 1 to 8.

In the figure:
- Fig. 1: shows a schematic perspective view of a valve;
- Fig. 2: shows the valve of figure 1 in an exploded view;
- Fig. 3: shows a sectional view of the valve in a closed state;
- Fig. 4: in a sectional view corresponding to figure 3 shows the valve in a closed state with activated spring;
- Fig. 5: in a sectional view corresponding to figures 3 and 4 shows the valve in an open state;
- Fig. 6: a schematic diagram of an irrigation system implementing valves in accordance with the invention;
- Fig. 7: a schematic perspective view of a combination of a valve according to the invention with a flow pressure reducing means and
- Fig. 8: a cross-sectional view of the setup shown in figure 7.

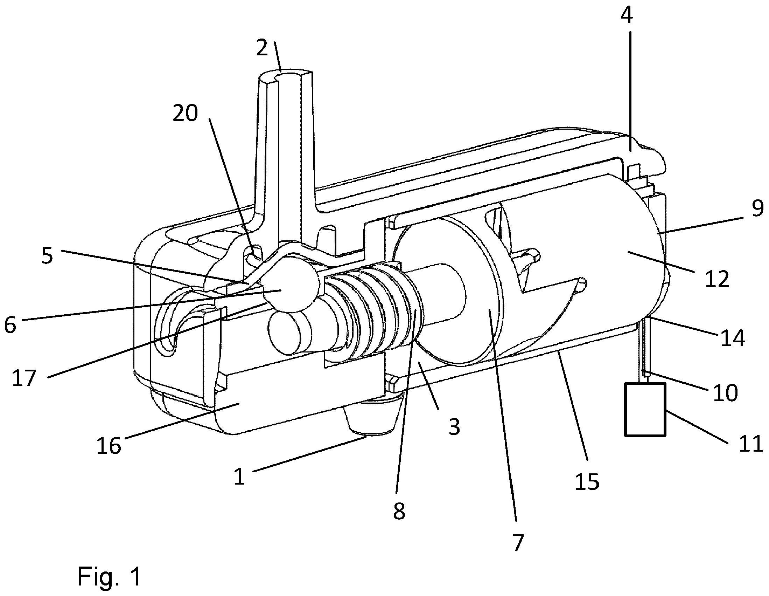

Figure 1 shows a valve in a perspective sectional view. The valve comprises a housing 4 which can comprise or can be made of a plastic or a metal, respectively, is designed in fluid-tight manner and is provided with a fluid inlet 1, typically a water inlet, and a fluid outlet 2, typically a water outlet. The fluid inlet 1 and the fluid outlet 2 are positioned on opposite sides of the housing 4. The housing 4 has a cavity 3 in its interior, which defines not only a fluid passage but is also equipped with several further units described in detail in the following.

In particular, a second casing 16 and a first casing 15 are positioned inside the cavity 3. In the embodiment depicted in figure 1, the fluid outlet 2 forms part of the first casing 15 but can likewise be part of the housing 4. The fluid inlet 1 and the housing 4 in the shown embodiment are arranged in a monolithic configuration while the fluid outlet 2 and the first casing 15 are likewise arranged in in a monolithic configuration, i.e., made up of one single piece.

The second casing 16 and the first casing 15 are made of the same material as that of the housing 4 but can also be made of different materials in further embodiments. The second casing 16 and the first casing 15 can be fitted against each other and the thus formed unit can be inserted into the cavity 3 of the housing 4 and is held in position via a clamp mechanism. In further embodiments, this unit may likewise be glued into the cavity 3 or the second casing 16 and the first casing 15 can be attached to each other using glue as well.

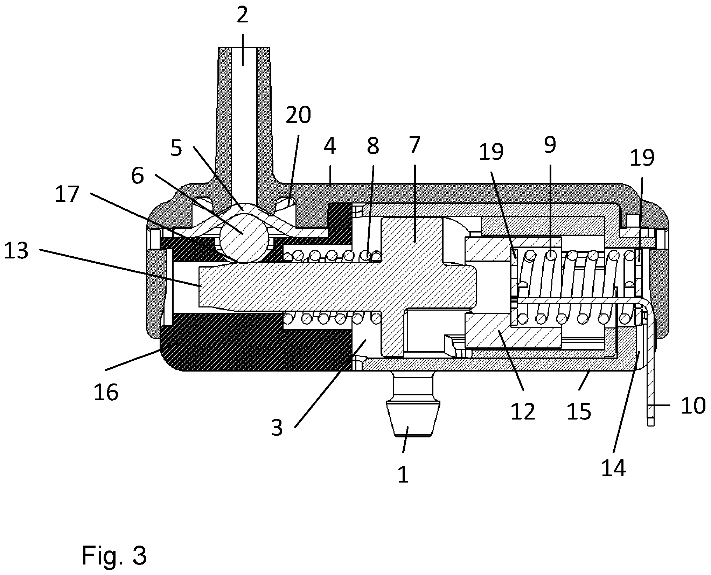

A membrane 5 is clamped into the second casing 16 above the end of the fluid outlet 2 which is facing the cavity 3. The membrane 5 is of a flexible material and a solid movable ball 6 is positioned on the side of the membrane 5 facing away from the fluid outlet 2. In further embodiments, the membrane 5 and the ball 6 can as well be positioned at the end of the fluid inlet 1. The ball 6 is in touching contact with the membrane 5 and the membrane 5 can be deformed by this ball 6. In case that pressure is applied, the membrane 5 is deformed in such a way that the fluid outlet 2 is closed as will be explained with regard to figures 3 to 5.

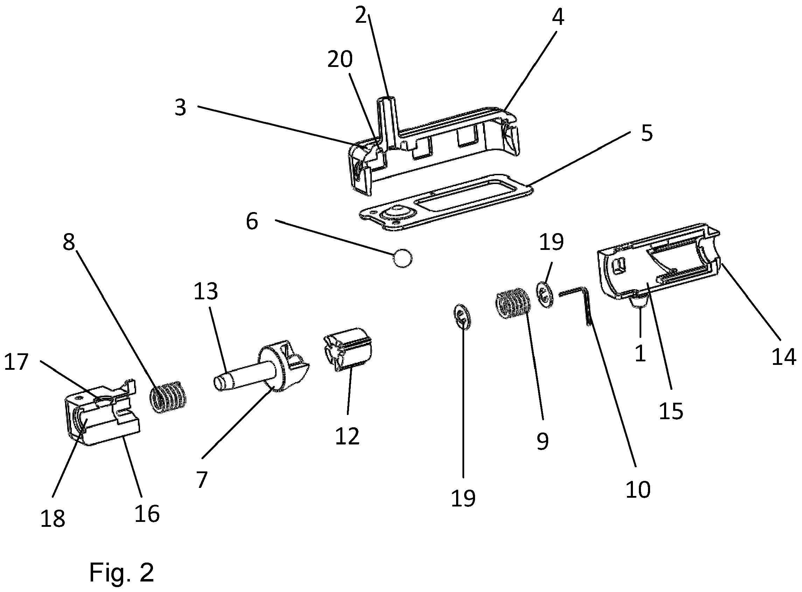

In the first casing 15, a movable element 7, in the depicted embodiment being a cam roller, is in touching contact with a piston 12 made of the same material as or a different material than that of the housing 4. Reference is being made in addition to figures 2 and 3. Inside the piston 12, a first grommet 19, which is touched by an activatable spring 9, the activatable spring 9 being as well located inside the piston 12, and a second grommet 19 are positioned. The activatable spring 9, which comprises a shape-memory-alloy like nickel titanium (NiTi) or nickel titanium copper (NiTiCu), is connected via an electric wire 10 to an electric control unit 11 which controls the overall function of the shown valve by applying electric current and/or electric voltage to the activatable spring 9. The electric wire 10 is guided in an opening 14 of the first casing 15.

The movable element 7, which, in the shown embodiment, is movable in a linear movement as well as in a rotational movement, has an angled edge 13 at the top which is guided in an opening 18 of the second casing 16. Between the second casing 16 and the movable element 7, a biased spring 8 is positioned which is a pressure spring in the depicted embodiment. The top of the movable element 7, i.e., the angled edge 13, is in touching contact with the movable ball 6.

A fluid passage through the cavity 3 extends between the fluid inlet 1 and the fluid outlet 2 and is configured as a channel 20 which runs behind the second casing 16 and in the shown embodiment ends below this second casing 16 in the vicinity of the fluid outlet 2. Thus, the fluid passage is by-passing the second casing 16 and physical or touching contact between the fluid and the units in the second casing 16 or the first casing 15 (like the movable element 7, the biased spring 8, or the activatable spring 9) is avoided.

Figure 2 shows the valve depicted in figure 1 in an exploded view. Recurring features in this figure and in the following figures in each case are provided with identical reference signs. As can be already seen from the above description of figures 1 and 2, the main purpose of the shown valve is to provide a novel valve system based on a combination of the shape-memory-alloy actuator (the activatable spring 9) working against the biased spring 8 with a project-retract mechanism, cardioids mechanism or push-push locking mechanism.

This allows switching between an opened and closed state by consecutive activation of only one actuator. The mechanism further enables keeping of the switching positions without the need to apply energy because the mechanism itself realizes the detent.

The project-retract mechanism in this case includes the movable element 7, the piston 12 and the biased spring 8. Figure 3 shows a sectional view of the valve in its closed state. The activatable state is deactivated, i.e. cold, and biased by the biased spring 8. The ball 6 is pushed against the membrane 5 by the movable element 7 and is held in a duct 17 limiting its movement due a movement in vertical direction.

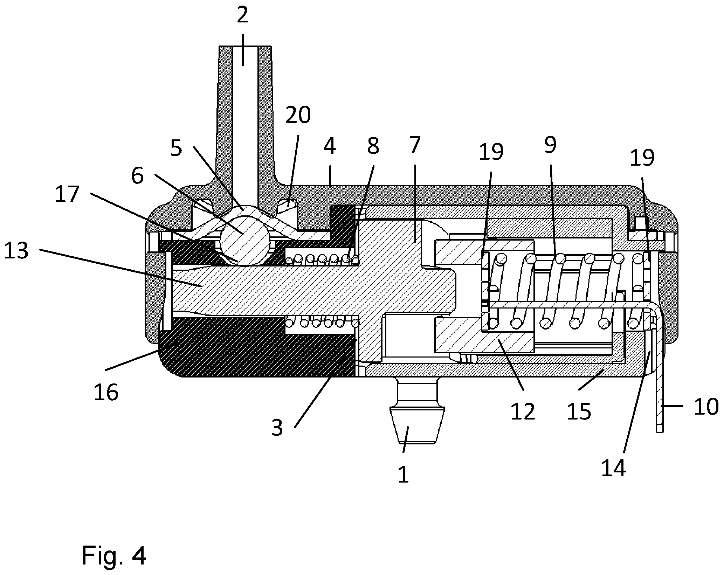

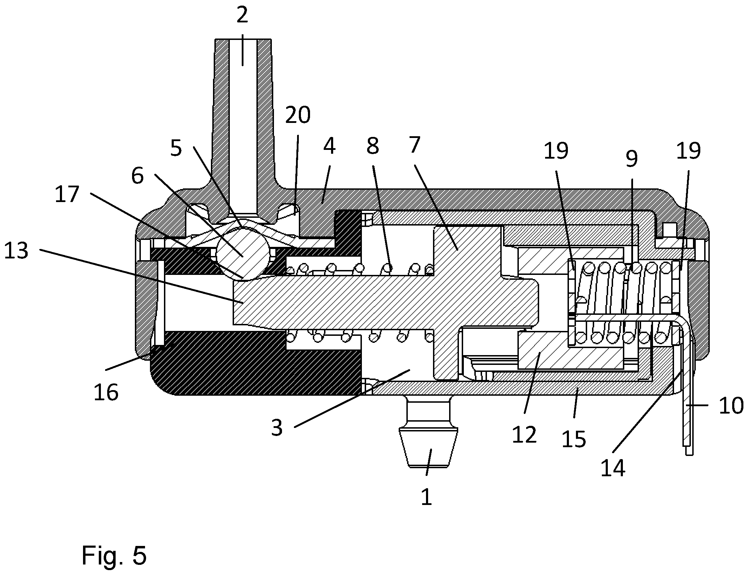

As shown in figure 4 in a sectional view corresponding to the sectional view of figure 3, the valve is activated by applying the electrical current to the activatable spring 9 via grommet 19, which acts as an electrical contact in this case. The activatable spring 9 expands and the force applied by the activatable spring 9 is oppositely directed to the force applied by the biased spring on the movable element 7. The activatable spring 9 pushes the piston 12 and the movable element 7 to the left against the biased spring 8. When the activatable spring 9 is fully expanded (as depicted in figure 4), the electrical current is switched off and the activatable spring 9 cools down. The biased spring 8 pushes back the movable element 7, the piston 12 and the activatable spring 9. If the snap point for the open state is reached, the piston 12 at its open end is in touching contact with the first casing 15, so that the movement is blocked. While the biased spring 8 and the activatable spring 9 only move linearly, the movable element 7 and the piston 12 perform a linear and rotary movement. When the movable element 7 moves to the right, the angled edge 13 provide moving space to the ball 6 and the membrane's 5 inherent elasticity causes the ball 6 to move, thereby releasing the membrane 5 and opening the fluid outlet 2. This situation is shown in figure 5 in another sectional view corresponding to those shown in figures 3 and 4.

In this position, the activatable spring 9 may be activated a second time and expands again. The piston 12 and the movable element 7 move to the left working against the biased spring 8. The ball 6 is pressed against the membrane 5 by the movable element 7 and the fluid outlet 2 is closed. When the activatable spring 9 is fully expanded, the electrical current is again switched off and the activatable spring 9 cools down. The biased spring 8 pushes back the movable element 7, the piston 12 and the activatable spring 9. If the snap point for the closed state is reached, the piston 12 and the movable element 7 are blocked by the first casing 15. When the movable element 7 moves to the left, the snap point for the closed state in the first casing 15 prevents the piston 12 and the movable element 7 from moving further to the left. The angled edge 13 does not move beyond the ball 6 and the membrane 5 stays under load closing the fluid outlet 2, thereby closing the valve as well.

Thus, in light of the valve implementation of a cardioids mechanism or push-push locking mechanism, the described valve does not have a preferred state, like normally open or normally closed, and can be kept in both states without applying energy. In particular when the valve needs to be opened or closed for longer periods of time, this is a clear advantage considering energy consumption. The described valve is typically used in irrigation systems, metering units or any kind of portable fluid handling devices for home care, point of care testing, or fragrance dispensers.

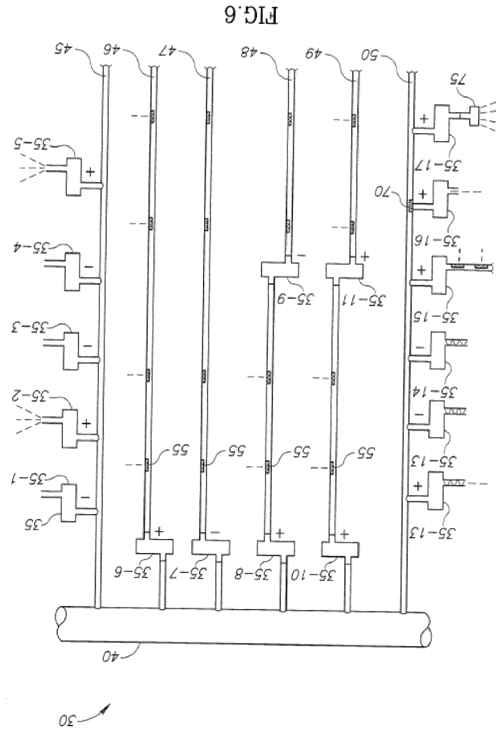

Figure 6 depicts a schematic diagram of an irrigation system 30 implementing irrigation valves 35 in accordance with the example described above.

According to the illustrated example, the system 30 includes a feed pipe 40 (e.g. a lay-flat type pipe), which enables the simultaneous influx of irrigation water to a plurality of drip irrigation laterals 45, 46, 47, 48, 49, and 50. In the illustrated example, the irrigation laterals 45-50 are deployed from the feed pipe 40 over the area designated for irrigation, wherein, as an example only and for clarifying the wide range of possible implementations of valves according to the invention, the system 30 is illustrated with different types of irrigation laterals mounted (as to be described below), and irrigation valves 35 of the invention are illustrated as mounted with those irrigation laterals in different ways and for different irrigation purposes (as to be set out below), wherein - for the sake of clarification - if irrigation valve 35 is in an operational state of water flowing through it is marked + with additional segmented lines depicting the water flowing from it to the surface area designated for irrigation, and if irrigation valve 35 is in an operational state of shutdown (no water flowing through it), is marked -.

Irrigation lateral 45 is a standard pipe that is fed with irrigation water from feed pipe along its entire length. Irrigation valves 35 are mounted, as illustrated, all along irrigation lateral 45, which are spaced from each other, wherein in the illustrated state, irrigation valves 35-2 and 35-5 are in an operational state of water flowing through them to the surface area designated for irrigation in their proximity, whereas irrigation valves 35-1, 35-3 and 35-4 are in a closed operational state and the irrigation water is not therefore collected from them.

Such an array enables controllable (on/off) precision irrigation at the level of a single end accessory (single valve) that is located near a specific surface area designated for irrigation.

Irrigation laterals 46 and 47 are drip irrigation laterals, i.e. pipes that are mounted along them with drip emitters 55 (in an in-line configuration wherein the drip emitters are mounted inside the irrigation lateral and form an integral part thereof or in an on-line configuration with the drip emitters mounted from the outside on the pipe). The drip emitters are of types already known in the art (pressure-regulated or non-regulated drip emitters). Irrigation laterals 46 and 47 are fed from feed pipe 40, wherein in the illustrated state, irrigation valve 35-6 that is mounted at the head of irrigation lateral 46 is in an operational state of water flowing through it, and therefore allows for drip irrigation along the entire length of the irrigation lateral of the nearby surface area (see the segmented lines of each of the drip emitters along the irrigation lateral), whereas irrigation valve 35-7 that is mounted at the head of irrigation lateral 47 is in a closed state where there is no irrigation from irrigation lateral 47.

Such an array allows for precision irrigation of the designated area at the level of each specific drip irrigation lateral.

Irrigation laterals 48 and 49 are also drip irrigation laterals (similar to irrigation laterals 46 and 47) wherein a plurality of irrigation valves 35 according to the invention are mounted along them. In the illustrated state, irrigation valve 35-8 is mounted at the head of irrigation lateral 48 in an operational water flow state, and irrigation valve 35-9 is mounted downstream of irrigation lateral 48 in a closed state. This situation allows for drip irrigation through a section of irrigation lateral 48 that is mounted between irrigation valves 35-8 and 35-9, whereas there is no drip irrigation in irrigation lateral 48 in the section of the irrigation lateral that is downstream from irrigation valve 35-9. In contrast, in the illustrated mode, drip irrigation is enabled all along irrigation lateral 49 (similar to irrigation lateral 46), since irrigation valves 35-10 and 35-11 are illustrated wherein both are in an operational state of water flowing through them.

Such an array allows for precision irrigation of the designated area at the level of a section of a specific drip irrigation lateral.

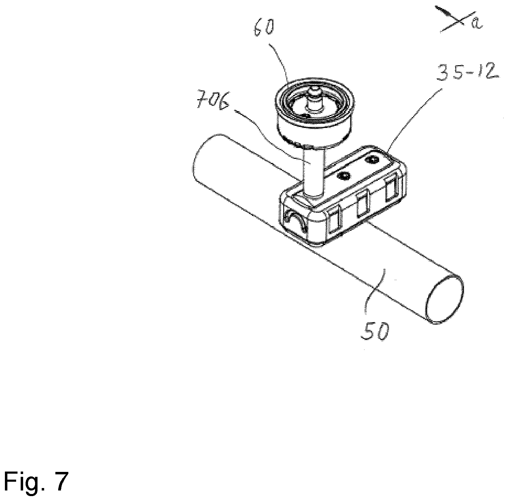

Irrigation lateral 50 is mounted along its length with a variety of irrigation means combined with valves according to the invention. Irrigation valves 35-12, 35-13 and 35-14 are each mounted, at the water outlet from them, with a drip emitter unit that may be of various types already known in the art (pressure-regulated drip emitters or non-regulated drip emitters), wherein the drip emitter unit is connected to a flow passage to it from the valve (see below with reference to Figs. 7a and 7b). Irrigation valve 35-12 is illustrated in an operational state of water flowing through it, and from it to drip emitter unit 60, which, as stated, is mounted in a row with it and connected to a flow passage to it from the valve, thereby enabling irrigation from the drip emitter unit un a drip by drip manner. Irrigation valves 35-13 and 35-14 are illustrated in a closed state and therefore there is no drip irrigation from the drip emitters mounted on them.

Such an array enables precision irrigation in a drip by drip manner that is controllable at the level of a single drip emitter unit located near a specific surface area designated for irrigation. In other words, this is a matter of enabling on/off control of the drip emitter.

Combining a drip emitter unit in a valve according to the invention could be done by an integral configuration (with a valve designed from the outset with a built-in drip emitter unit) or whereby the drip emitter unit is interfaced as an add-on accessory that is mounted on the valve (we will elaborate on this further while referring to Figs. 7a and 7b).

Irrigation valve 35-15 shows a mounting at the water outlet of drip irrigation lateral 65 (the illustrated example depicts an irrigation lateral with several drip emitters mounted along it).

Such an array enables precision irrigation in a drip configuration from a plurality of drip emitters simultaneously. This irrigation can be controlled at the level of the individual drip irrigation lateral, which is located near a specific area designated for irrigation along an irrigation lateral. A skilled person would also understand that this is only an example, and irrigation valve 35-15 can feed a parallel array of multiple drip irrigation laterals.

Irrigation valve 35-16 depicts the mounting of the valve to drip emitter 70, which is already mounted along the irrigation lateral (in an in-line configured drip emitter that is mounted inside irrigation lateral 50 and forms an integral part thereof or in an on-line configuration with the drip emitter mounted from the outside on the pipe).

Thus, given a mechanical interface (connector) connecting between the valve according to the invention and a drip emitter standardly mounted in an irrigation lateral (and needless to say this call for a standard mechanical adapter design), precision irrigation in a controllable (on/off) drip irrigation configuration can be achieved at the individual drip emitter level, which is already near a specific surface area designated for irrigation.

Irrigation valve 35-17 depicts the mounting of the water outlet from it with an end irrigation accessory other than a drip emitter, but rather a sprinkler or spray nozzle 75.

Such an array enables precise irrigation in a drip irrigation configuration that is controllable (on/off) at the level of a single drip emitter unit near a specific surface area designated for irrigation.

Combining a sprinkler unit or a spray nozzle unit in a valve according to the invention could be done in an integral configuration (with a valve designed from the outset with a built-in spray nozzle or sprinkler unit) or whereby the sprinkler or spray nozzle unit is interfaced as an add-on accessory that is mounted on the valve.

Each of the described irrigation valves 35requires command and control capabilities (giving timed commands for operation and shutdown of activatable spring 9 according to the example of a valve described above in reference to Figs. 1 - 5) as well as the supply of electrical power (needed for its operation).

When this involves a multi-valve irrigation system according to the invention (such as the system 30 described above in reference to Fig. 6), then command and control capabilities and the supply of electric power sometimes requires a systemic solution that provides more than manual on/off capabilities of a single valve (via switch) and the supply of power from a battery mounted on that valve (which naturally has to be charged or replaced from time to time). In the field of irrigation systems such means have long been implemented, and they are therefore not illustrated in Fig. 6.

Thus, for example, a line wiring method may be used for the command and control task. This can be done by laying suitable wiring parallel to the irrigation laterals or by making the irrigation laterals from the outset with suitable wiring lines embedded in the wall of the irrigation lateral during production or mounted to it. Another example - the command and control may be provided wirelessly, e.g. by cellular communication, radio frequency (RF), Bluetooth^{®}, Wi-Fi systems. In another example, the command and control embodiment may be implemented by acoustic communication means, by utilizing the irrigation water medium inside the irrigation laterals for transferring command and control commands through it to the valves.

The line wiring method can be used for supplying electrical power by laying suitable wiring parallel to the irrigation laterals or by making the irrigation laterals from the outset with suitable wiring lines built into the wall of the irrigation lateral during production or mounted to it. The line wiring method can also use command and control lines for transferring electrical power (as is needed to operate the valves directly or for charging batteries mounted to the valves). In another example, a solar system can be installed that will provide electrical power to a single valve or to a plurality of valves (as needed to operate the valves directly or for charging batteries mounted to the valves). Another example: the flow of water in the irrigation laterals can be used to generate the electrical energy needed (by installing a water-powered turbine and generating the power needed for charging the battery at the level of a single valve or a plurality of valves).

A multi-valve irrigation system according to the invention (such as the system 30 described above in reference to Fig. 6) could be mounted with additional means (not illustrated), as required for command and control and power supply purposes (e.g. a command and control exchange, communication relays, a valve at the head of the system to control the flow of water to the feed pipe), and be integrated for operation based on indications received externally regarding varying irrigation needs in the specific field or even part of a specific field (e.g. a system of soil sensors for measuring moisture, systems that analyze air or satellite photographs as to the soil/field irrigation requirements).

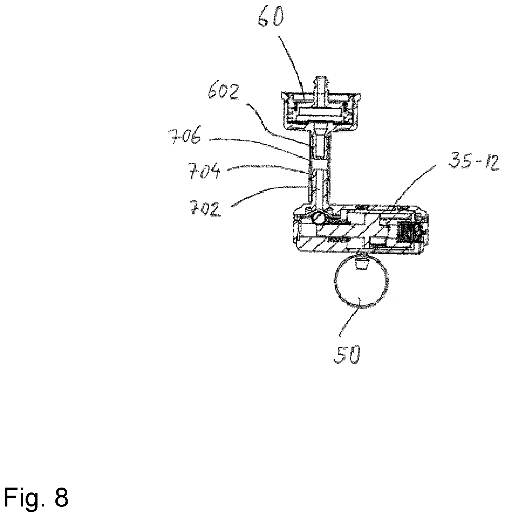

Figs. 7 and 8 are schematic drawings that (respectively) depict in perspective and in cross-section (cross-section a-a marked in Fig. 7, an example of a combination of irrigation valve 35-12 according to the invention with a flow pressure reducing means (regulated drip emitter 60), in a manner that enables using the valve as part of a controlled (on/off) drip emitter, by mounting it on irrigation lateral 50 (see above in reference to Fig. 6, irrigation valves 35-12, 35-13 and 35-14).

According to the illustrated example, drip emitter 60 is a regulated drip emitter of a type that is already known in the art and is meant to be mounted by on-line insertion on an irrigation lateral. However, a skilled person would understand that this is just an example, and other drip emitters can be mounted in combination with a valve according to the invention.

According to the illustrated example, water outlet 702 from irrigation valve 35-12 is formed with tooth (barbed) connector 704, which is inserted into a mechanical interface (connector or adapter) that according to the illustrated example is in the configuration of pipe section 706, which is adapted on the other side to connect with tooth (barbed) connector 602, which is standardly formed at water inlet 602 to drip emitter 60 (and is regularly used for mounting it, as stated, by on-line insertion on an irrigation lateral).

The embodiments shown in figure 7 in a perspective view and in figure 8 in a cross-sectional view are only examples, and other and different mechanical interfaces (connectors or adapters) could be used for providing flow passage from a valve according to the invention to a drip emitter unit.

In the illustrated configuration, this combines a drip emitter as an add-on means added onto to the valve according to the invention, but a skilled person would understand that giving the drip emitter on/off capabilities (and therefore converting it to a controlled drip emitter) or another irrigation means (e.g. spray nozzle or sprinkler, see above in reference to Fig. 6, nozzle spray 75 in mounting it to the water outlet from irrigation valve 35-17), by means of a combination with a valve according to the invention, could be made from the outset in an integral (built in) configuration - by initially designing a valve structure according to the invention with drip emitter mechanism or other irrigation means (e.g. spray nozzle or sprinkler) integrally built into the valve. For example, the water outlet from the valve may be formed from the outset, with a baffle labyrinth (maze) type of water passage for reducing the pressure of the water leaving the valve. Additional features which are commonly used in agricultural irrigation end units may also be added to the valve construction, such as for example a filter element to be positioned at the valve's fluid inlet for preventing debris and dirt from entering the valve and therefore reducing the risk of clogging. Moreover, in the illustrated configuration, a drip emitter is mounted in a row to the water outlet from the valve, but similar capabilities could be achieved by mounting a valve according to the invention to a water outlet from a drip emitter (see above in reference to Fig. 6, irrigation valve 35-16 that is mounted in a row to a water outlet from drip emitter 70).

## Claims

1. Valve comprising
a housing (4) with a fluid inlet (1), a fluid outlet (2), and a cavity (3) positioned between the fluid inlet (1) and the fluid outlet (2) in the housing (4),
wherein a membrane (5) is arranged at an end of the fluid inlet (1) or at an end of the fluid outlet (2) facing the cavity (3) and a movable solid element (6) is in touching contact with the membrane (5) arranged on a side of the membrane (5) facing the cavity (3),
so that the membrane (5) can be deformed by the solid element (6) upon exertion of pressure on the solid element (6) for closing and opening the fluid inlet (1) or the fluid outlet (2),
and **characterized by** a movable element (7) arranged in the cavity (3) and in touching contact with the solid element (6),
wherein the movable element (7) is held in a first position by a biased spring (8) and a shape-memory-actuator (9), which are arranged on opposite sides of the movable element (7),
wherein the shape-memory-actuator (9) comprises a shape-memory-alloy which is activatable by applying an electric voltage resulting in a deformation of the shape-memory-actuator (9) and in a movement of the movable element (7), thereby exerting pressure on the solid element (6) so that the solid element (6) moves, a deformation of the membrane (5) takes place and a fluid passage (20) between the fluid inlet (1) and the fluid outlet (2) can be opened and closed.

2. Valve according to claim 1, **characterized in that** the shape-memory-actuator (9) is a voice-coil-actuator, preferably an activatable spring.

3. Valve according to claim 1 or 2,
**characterized in that** shape-memory actuator (9) works against the biased spring (8) with a project-retract mechanism, push-push mechanism or cardioids mechanism.

4. Valve according to any of the preceding claims, **characterized in that** the shape-memory-actuator (9) is in electric contact with an electric wire (10)
and preferably **in that** the shape-memory-actuator (9) is connected to an electric control unit (11) through the electric wire (10).

5. Valve according to any of the preceding claims, **characterized in that** the shape-memory-actuator (9) is configured to expand upon applying an electric current and/or
the biased spring (8) and the shape-memory-actuator (9) apply oppositely directed pressures on the movable element (7).

6. Valve according to any of the preceding claims, **characterized in that** the biased spring (8) is a pressure spring and/or
**in that** the movable element (7) is a cam roller.

7. Valve according to any of the preceding claims, **characterized in that** the shape-memory-actuator (9) is located inside a piston (12) which is in mechanical contact with the movable element (7).

8. Valve according to any of the preceding claims, **characterized in that** the movable element (7) has a tapering top (13) and/or an angled edge at the top (13) touching the solid element (6), preferably so that the solid element (6) can be moved in a direction orthogonal to an axis of the linear movement of the movable element (7).

9. Valve according to any of the preceding claims, **characterized in that** the fluid inlet (1) and the fluid outlet (2) are arranged on opposite sides of the housing (4) and/or
**in that** the housing (4) is a fluid-tight housing and the only openings are the fluid inlet (1), the fluid outlet (2), and an opening (14) for an electric connection of the activatable spring (9).

10. Valve according to any of the preceding claims, **characterized in that** at least the biased spring (8), the movable element (7), and the shape-memory-actuator (9) are arranged inside a first casing (15) which is placed inside the cavity (3) of the housing (4) and/or
**in that** the solid element (6) and the membrane (5) are positioned in a second casing (16), wherein the membrane (5) is attached to this second casing (16) and the solid element (6) is positioned in an opening (17) of this second casing (16), wherein the second casing (16) comprises a further opening (18) into which the movable element (7) can be inserted.

11. Valve according to any of the preceding claims, **characterized in that** the solid element (6) is a solid, non-deformable ball.

12. Valve according to any of the preceding claims, **characterized in that** the fluid passage (20) is configured as a channel in such a way that a touching contact between the fluid and the movable solid element (6), the biased spring (8), the movable element (7) and the activatable element (9) is avoided.

13. Irrigation valve (35) comprising the valve according to any of the preceding claims, preferably
wherein said valve (35) comprises in addition a drip irrigation emitter (60, 70) mounted either to the fluid outlet (2) of the valve or to the fluid inlet (1) of the valve for providing the water flow out of said valve to be in a drip by drip manner.

14. Irrigation system (30) comprising at least one irrigation water supplied pipe (45, 46, 47, 48, 49, 50) and at least one irrigation valve (35) according to claim 13 mounted to said pipe (45, 46, 47, 48, 49, 50) for controllably conveying irrigation water either to said pipe (45, 46, 47, 48, 49, 50) or from said pipe (45, 46, 47, 48, 49, 50).

15. Method for operating a valve according to any of claims 1 to 12, in which according to a first movement:
an electric current is applied to the shape-memory-actuator (9), so that the shape-memory-actuator (9) is deformed, and the pressure of the biased spring (8) exerted on the movable element (7) is overcompensated resulting in a movement of the movable element (7) in the direction of the biased spring (8),
and according to a second movement the pressure of the shape-memory-actuator (9) exerted on the movable element (7) is overcompensated by the pressure of the biased spring (8) resulting in a movement of the movable element (7) in the direction of the shape-memory-actuator (9),
and in which by way of the first movement one of the following is provided:
applying a pressure on the solid element (6) and the membrane (5), so that the fluid inlet (1) or the fluid outlet (2) is closed, or releasing the pressure on the solid element (6) and the membrane (5), so that the fluid inlet (1) or the fluid outlet (2) is opened; and
by way of the second movement the respective other of applying or releasing the pressure is provided.

## Patentansprüche

1. Ventil, umfassend:
ein Gehäuse (4) mit einem Fluideinlass (1), einem Fluidauslass (2) und einer zwischen dem Fluideinlass (1) und dem Fluidauslass (2) im Gehäuse (4) angeordneten Kavität (3),
wobei eine Membran (5) an einem Ende des Fluideinlasses (1) oder an einem Ende des Fluidauslasses (2), das der Kavität (3) zugewandt ist, angeordnet ist, und ein bewegliches festes Element (6) in Berührungskontakt mit der Membran (5) steht, das auf einer der Kavität (3) zugewandten Seite der Membran (5) angeordnet ist,
so dass die Membran (5) durch das feste Element (6) verformt werden kann, wenn Druck auf das feste Element (6) ausgeübt wird, um den Fluideinlass (1) oder den Fluidauslass (2) zu schließen oder zu öffnen,
und **gekennzeichnet durch** ein bewegliches Element (7), das in der Kavität (3) angeordnet ist und in Berührungskontakt mit dem festen Element (6) steht,
wobei das bewegliche Element (7) durch eine vorgespannte Feder (8) und einen Formgedächtnisaktuator (9), die auf gegenüberliegenden Seiten des beweglichen Elements (7) angeordnet sind, in einer ersten Position gehalten wird,
wobei der Formgedächtnisaktuator (9) eine Formgedächtnislegierung enthält, die durch Anlegen einer elektrischen Spannung aktiviert werden kann, die zu einer Verformung des Formgedächtnisaktuators (9) und zu einer Bewegung des beweglichen Elements (7) führt, wodurch Druck auf das feste Element (6) ausgeübt wird, so dass sich das feste Element (6) bewegt, eine Verformung der Membran (5) stattfindet und ein Fluiddurchlass (20) zwischen dem Fluideinlass (1) und dem Fluidauslass (2) geöffnet und geschlossen werden kann.

2. Ventil nach Anspruch 1, **dadurch gekennzeichnet, dass** der Formgedächtnisaktuator (9) ein Schwingspulen-Aktuator, vorzugsweise eine aktivierbare Feder, ist.

3. Ventil nach Anspruch 1 oder 2,
**dadurch gekennzeichnet, dass** der Formgedächtnisaktuator (9) gegen die vorgespannte Feder (8) mit einem Projektions-Rückzugs-Mechanismus, Push-Push-Mechanismus oder Kardioiden-Mechanismus arbeitet.

4. Ventil nach einem der vorangehenden Ansprüche, **dadurch gekennzeichnet, dass** der Formgedächtnisaktuator (9) in elektrischem Kontakt mit einem elektrischen Draht (10) steht,
und vorzugsweise dadurch, dass der Formgedächtnisaktuator (9) über den elektrischen Draht (10) mit einer elektrischen Steuereinheit (11) verbunden ist.

5. Ventil nach einem der vorangehenden Ansprüche, **dadurch gekennzeichnet, dass** der Formgedächtnisaktuator (9) eingerichtet ist, sich bei Anlegen eines elektrischen Stroms auszudehnen und/oder
die vorgespannte Feder (8) und der Formgedächtnisaktuator (9) gegenläufige Drücke auf das bewegliche Element (7) ausüben.

6. Ventil nach einem der vorangehenden Ansprüche, **dadurch gekennzeichnet, dass** die vorgespannte Feder (8) eine Druckfeder ist, und/oder
dass das bewegliche Element (7) eine Nockenrolle ist.

7. Ventil nach einem der vorangehenden Ansprüche, **dadurch gekennzeichnet, dass** der Formgedächtnisaktuator (9) im Inneren eines Kolbens (12) angeordnet ist, der in mechanischem Kontakt mit dem beweglichen Element (7) steht.

8. Ventil nach einem der vorangehenden Ansprüche, **dadurch gekennzeichnet, dass** das bewegliche Element (7) eine sich verjüngende Oberseite (13) und/oder eine abgewinkelte Kante an der Oberseite (13) aufweist, die das feste Element (6) berührt, vorzugsweise so, dass das feste Element (6) in einer Richtung orthogonal zu einer Achse der linearen Bewegung des beweglichen Elements (7) bewegt werden kann.

9. Ventil nach einem der vorangehenden Ansprüche, **dadurch gekennzeichnet, dass** der Fluideinlass (1) und der Fluidauslass (2) auf gegenüberliegenden Seiten des Gehäuses (4) angeordnet sind und/oder
dass das Gehäuse (4) ein fluiddichtes Gehäuse ist und die einzigen Öffnungen der Fluideinlass (1), der Fluidauslass (2) und eine Öffnung (14) für eine elektrische Verbindung der aktivierbaren Feder (9) sind.

10. Ventil nach einem der vorangehenden Ansprüche, **dadurch gekennzeichnet, dass** zumindest die vorgespannte Feder (8), das bewegliche Element (7) und der Formgedächtnisaktuator (9) innerhalb einer ersten Ummantelung (15) angeordnet sind, die sich innerhalb der Kavität (3) des Gehäuses (4) befindet und/oder
dass das feste Element (6) und die Membran (5) in einer zweiten Ummantelung (16) angeordnet sind, wobei die Membran (5) an dieser zweiten Ummantelung (16) befestigt ist und das feste Element (6) in einer Öffnung (17) dieser zweiten Ummantelung (16) angeordnet ist, wobei das zweite Gehäuse (16) eine weitere Öffnung (18) aufweist, in die das bewegliche Element (7) eingesetzt werden kann.

11. Ventil nach einem der vorangehenden Ansprüche, **dadurch gekennzeichnet, dass** das feste Element (6) eine feste, nicht verformbare Kugel ist.

12. Ventil nach einem der vorangehenden Ansprüche, **dadurch gekennzeichnet, dass** der Fluiddurchlass (20) so als ein Kanal ausgestaltet ist, dass ein Berührungskontakt zwischen dem Fluid und dem beweglichen festen Element (6), der vorgespannten Feder (8), dem beweglichen Element (7) und dem aktivierbaren Element (9) vermieden wird.

13. Bewässerungsventil (35), umfassend ein Ventil nach einem der vorhergehenden Ansprüche, vorzugsweise
wobei das Ventil (35) zusätzlich einen Tropfbewässerungs-Abgeber (60, 70) umfasst, der entweder an dem Fluidauslass (2) des Ventils oder an dem Fluideinlass (1) des Ventils angebracht ist, um den Wasserfluss aus dem Ventil tropfenweise zu gewährleisten.

14. Bewässerungssystem (30), umfassend mindestens eine mit Bewässerungswasser versorgte Leitung (45, 46, 47, 48, 49, 50) und mindestens ein Bewässerungsventil (35) nach Anspruch 13, das an der Leitung (45, 46, 47, 48, 49, 50) angebracht ist, um Bewässerungswasser entweder zu der Leitung (45, 46, 47, 48, 49, 50) oder von der Leitung (45, 46, 47, 48, 49, 50) steuerbar zu fördern.

15. Verfahren zum Betreiben eines Ventils nach einem der Ansprüche 1 bis 12, bei dem gemäß einer ersten Bewegung:
ein elektrischer Strom an den Formgedächtnisaktuator (9) angelegt wird, so dass der Formgedächtnisaktuator (9) verformt wird und der Druck der vorgespannten Feder (8), der auf das bewegliche Element (7) ausgeübt wird, überkompensiert wird, was zu einer Bewegung des beweglichen Elements (7) in Richtung der vorgespannten Feder (8) führt,
und gemäß einer zweiten Bewegung der Druck des Formgedächtnisaktuators (9), der auf das bewegliche Element (7) ausgeübt wird, durch den Druck der vorgespannten Feder (8) überkompensiert wird, was zu einer Bewegung des beweglichen Elements (7) in Richtung des Formgedächtnisaktuators (9) führt,
und bei dem durch die erste Bewegung eines der folgenden vorgesehen ist:
Ausüben eines Drucks auf das feste Element (6) und die Membran (5), so dass der Fluideinlass (1) oder der Fluidauslass (2) geschlossen wird, oder Freigeben des Drucks auf das feste Element (6) und die Membran (5), so dass der Fluideinlass (1) oder der Fluidauslass (2) geöffnet wird; und
durch die zweite Bewegung das jeweils andere von der Ausübung oder Freigabe des Druckes bereitgestellt wird.

## Revendications

1. Soupape comprenant
un carter (4) avec une entrée de fluide (1), une sortie de fluide (2), et une cavité (3) positionnée entre l'entrée de fluide (1) et la sortie de fluide (2) dans le carter (4),
dans laquelle une membrane (5) est agencée à une extrémité de l'entrée de fluide (1) ou à une extrémité de la sortie de fluide (2) faisant face à la cavité (3) et un élément solide mobile (6) est en contact avec la membrane (5) agencé d'un côté de la membrane (5) faisant face à la cavité (3),
de sorte que la membrane (5) puisse être déformée par l'élément solide (6) lorsqu'une pression est exercée sur l'élément solide (6) pour fermer et ouvrir l'entrée de fluide (1) ou la sortie de fluide (2),
et **caractérisée par** un élément mobile (7) agencé dans la cavité (3) et en contact avec l'élément solide (6),
dans laquelle l'élément mobile (7) est maintenu dans une première position par un ressort (8) sollicité et un actionneur à mémoire de forme (9), qui sont agencés sur des côtés opposés de l'élément mobile (7),
dans laquelle l'actionneur à mémoire de forme (9) comprend un alliage à mémoire de forme qui peut être activé par l'application d'une tension électrique entraînant une déformation de l'actionneur à mémoire de forme (9) et un mouvement de l'élément mobile (7), exerçant ainsi une pression sur l'élément solide (6) de sorte que l'élément solide (6) se déplace, qu'une déformation de la membrane (5) se produise et qu'un passage de fluide (20) entre l'entrée de fluide (1) et la sortie de fluide (2) puisse être ouvert et fermé.

2. Soupape selon la revendication 1, **caractérisée en ce que** l'actionneur à mémoire de forme (9) est un actionneur à bobine mobile, de préférence un ressort activable.

3. Soupape selon la revendication 1 ou 2,
**caractérisée en ce que** l'actionneur à mémoire de forme (9) agit contre le ressort (8) sollicité à l'aide d'un mécanisme de projection-rétraction, d'un mécanisme à poussoir ou d'un mécanisme cardioïde.

4. Soupape selon l'une quelconque des revendications précédentes, **caractérisée en ce que** l'actionneur à mémoire de forme (9) est en contact électrique avec un fil électrique (10)
et de préférence **en ce que** l'actionneur à mémoire de forme (9) est relié à une unité de commande électrique (11) par l'intermédiaire du fil électrique (10).

5. Soupape selon l'une quelconque des revendications précédentes, **caractérisée par le fait que** l'actionneur à mémoire de forme (9) est configuré pour se dilater lors de l'application d'un courant électrique et/ou lorsque
le ressort (8) sollicité et l'actionneur de mémoire de forme (9) exercent des pressions opposées sur l'élément mobile (7).

6. Soupape selon l'une quelconque des revendications précédentes, **caractérisée en ce que** le ressort (8) sollicité est un ressort de pression et/ou
**en ce que** l'élément mobile (7) est un galet de came.

7. Soupape selon l'une quelconque des revendications précédentes, **caractérisée en ce que** l'actionneur à mémoire de forme (9) est situé à l'intérieur d'un piston (12) qui est en contact mécanique avec l'élément mobile (7).

8. Soupape selon l'une quelconque des revendications précédentes, **caractérisée en ce que** l'élément mobile (7) a un sommet (13) effilé et/ou un bord angulaire au sommet (13) touchant l'élément solide (6), de préférence de sorte que l'élément solide (6) puisse être déplacé dans une direction orthogonale à un axe du mouvement linéaire de l'élément mobile (7).

9. Soupape selon l'une quelconque des revendications précédentes, **caractérisée en ce que** l'entrée de fluide (1) et la sortie de fluide (2) sont agencées sur des côtés opposés du carter (4) et/ou
**en ce que** le carter (4) est un carter étanche et que les seules ouvertures sont l'entrée de fluide (1), la sortie de fluide (2) et une ouverture (14) pour une connexion électrique du ressort activable (9).

10. Soupape selon l'une quelconque des revendications précédentes, **caractérisée en ce qu'**au moins le ressort (8) sollicité, l'élément mobile (7) et l'actionneur à mémoire de forme (9) sont agencés à l'intérieur d'un premier corps (15) qui est placé à l'intérieur de la cavité (3) du carter (4) et/ou
**en ce que** l'élément solide (6) et la membrane (5) sont positionnés dans un second corps (16), dans laquelle la membrane (5) est fixée à ce second corps (16) et l'élément solide (6) est positionné dans une ouverture (17) de ce second corps (16), dans laquelle le second corps (16) comprend une autre ouverture (18) dans laquelle l'élément mobile (7) peut être inséré.

11. Soupape selon l'une quelconque des revendications précédentes, **caractérisée en ce que** l'élément solide (6) est une bille solide indéformable.

12. Soupape selon l'une quelconque des revendications précédentes, **caractérisée en ce que** le passage de fluide (20) est configuré comme un canal de manière à éviter un contact entre le fluide et l'élément solide mobile (6), le ressort (8) sollicité, l'élément mobile (7) et l'élément activable (9).

13. Soupape d'irrigation (35) comprenant la soupape selon l'une quelconque des revendications précédentes, de préférence
dans laquelle ladite soupape (35) comprend en outre un émetteur d'irrigation goutte à goutte (60, 70) monté soit sur la sortie de fluide (2) de la soupape, soit sur l'entrée de fluide (1) de la soupape, pour assurer l'écoulement de l'eau hors de ladite soupape au goutte à goutte.

14. Système d'irrigation (30) comprenant au moins un tuyau alimenté en eau d'irrigation (45, 46, 47, 48, 49, 50) et au moins une soupape d'irrigation (35) selon la revendication 13 montée sur ledit tuyau (45, 46, 47, 48, 49, 50) pour acheminer de manière contrôlée l'eau d'irrigation soit vers ledit tuyau (45, 46, 47, 48, 49, 50), soit à partir dudit tuyau (45, 46, 47, 48, 49, 50).

15. Procédé d'actionnement d'une soupape selon l'une quelconque des revendications 1 à 12, dans lequel selon un premier mouvement :
un courant électrique est appliqué à l'actionneur à mémoire de forme (9), de sorte que l'actionneur à mémoire de forme (9) est déformé et que la pression du ressort (8) sollicité exercée sur l'élément mobile (7) est surcompensée, entraînant un mouvement de l'élément mobile (7) dans la direction du ressort (8) sollicité,
et selon un second mouvement, la pression de l'actionneur à mémoire de forme (9) exercée sur l'élément mobile (7) est surcompensée par la pression du ressort (8) sollicité, entraînant un mouvement de l'élément mobile (7) dans la direction de l'actionneur à mémoire de forme (9),
et dans lequel, au moyen du premier mouvement, l'un des éléments suivants est fourni :
application d'une pression sur l'élément solide (6) et la membrane (5), de sorte que l'entrée de fluide (1) ou la sortie de fluide (2) soit fermée, ou relâchement de la pression sur l'élément solide (6) et la membrane (5), de sorte que l'entrée de fluide (1) ou la sortie de fluide (2) soit ouverte ; et
au moyen du second mouvement, l'autre respectif de l'application ou du relâchement de la pression est fourni.
